Europäisches Patentamt

European Patent Office

Office européen des brevets

(11) Veröffentlichungsnummer: **0 379 036**
**A2**

(12) **EUROPÄISCHE PATENTANMELDUNG**

(21) Anmeldenummer: 90100354.1

(22) Anmeldetag: 10.05.84

(51) Int. Cl.⁵: **F16D 35/02, F16H 15/01**

Diese Anmeldung is am 09 - 01 - 1990 als
Teilanmeldung zu der unter INID-Kode 60
erwähnten Anmeldung eingereicht worden.

(30) Priorität: 24.06.83 DE 3322779

(43) Veröffentlichungstag der Anmeldung:
25.07.90 Patentblatt 90/30

(60) Veröffentlichungsnummer der früheren
Anmeldung nach Art. 76 EPÜ: 0 129 685

(84) Benannte Vertragsstaaten:
FR GB IT SE

(71) Anmelder: **Süddeutsche Kühlerfabrik Julius
Fr. Behr GmbH & Co. KG
Mauserstrasse 3
D-7000 Stuttgart 30(DE)**

(72) Erfinder: **Martin, Hans, Dipl.-Ing.
Wartbergstrasse 27
D-7000 Stuttgart 1(DE)**

(54) Flüssigkeitsreibungskupplung.

(57) Eine Flüssigkeitsreibungskupplung arbeitet
gleichzeitig als Planetengetriebe, wobei die einzelnen Glieder des Planetengetriebes als Flüssigkeitsreibungselemente ausgebildet sind. Der Antrieb erfolgt mittels eines Keilriementriebes (3) über das
Gehäuse (3), d.h. die Außensonne, und der Abtrieb
(2) über die Innensonne (8), die hier einen Lüfter
(21) trägt. Beim Wandlerbetrieb wird der Planetenträger bzw. Steg, desen Welle (1) aus dem Gehäuse
nach außen geführt ist, abgebremst; somit ist eine
Übersetzung vom Antrieb Richtung Abtrieb ins
Schnelle möglich. Beim Kupplungsbetrieb wird die
Bremse losgelassen, so daß sich alle drei Glieder
des Planetengetriebes frei bewegen können.

# Flüssigkeitsreibungskupplung

Die Erfindung geht aus von einer Flüssigkeitsreibungskupplung gemäß dem Oberbegriff des Patentanspruches 1, wie sie durch die DE-AS 28 14 6o8 bekannt wurde.

Bei derartigen Flüssigkeitsreibungskupplungen wird die Leistung über die Scherkräfte eines viskosen Mediums vom Antrieb auf den Abtrieb übertragen. Im Arbeitsbereich dieser Kupplung liegt dabei das Verhältnis von Abtriebs-zu Antriebsdrehzahl immer unter dem Wert 1, da zwischen Antriebsscheibe und abtreibendem Gehäuse ständig ein bestimmter Schlupf auftritt. Bisher war es nicht möglich, mit diesem Kupplungsprinzip eine Erhöhung der Abtriebsdrehzahl zu erreichen.

Aufgabe der Erfindung ist es, ausgehend von einer Flüssigkeitsreibungskupplung gemäß dem Oberbegriff des Patentanspruches 1, eine Erhöhung der Abtriebsdrehzahl, d.h. eine Übersetzung von der Antriebsdrehzahl ins Schnelle, zu erreichen. Insbesondere ist es Aufgabe der Erfindung, daß die Erhöhung der Abtriebsdrehzahl bei niedrigen Antriebsdrehzahlen erreicht wird und daß die Abtriebsdrehzahl bei höheren Antriebsdrehzahlen wieder gesenkt werden kann. Die Lösung dieser Aufgabe ergibt sich aus den kennzeichnenden Merkmalen des Patentanspruches 1: danach wird das Prinzip eines Planetengetriebes kombiniert mit dem Prinzip der Flüssigkeitsreibungskupplung, wodurch eine Übersetzung ins Schnelle und auch eine Änderung der Übersetzung möglich wird. Die Kupplung kann also einerseits als Getriebe bzw. Wandler und andererseits als reine Schlupfkupplung arbeiten. Diese Doppelfunktion ist insbesondere für solche Kupplungen von großem Vorteil, die in Fahrzeugen zum Antrieb eines Lüfters zur Kühlung der Brennkraftmaschine eingebaut werden. Hier bewirkt eine erhöhte Lüfterdrehzahl bei niedriger Antriebsdrehzahl, d.h. bei niedriger Motordrehzahl, einen erhöhten Kühlluftstrom durch den Kühler der Brennkraftmaschine, was eine verbesserte Motorkühlung zur Folge hat. Da dieser Bereich mit niedriger Motordrehzahl auch maßgebend für die Dimensionierung der Kühlanlage bzw. des Wasser/Luft-Kühlers des Motors ist, kann durch eine Erhöhung der Lüfterdrehzahl in diesem Bereich der Kühler bezüglich seiner Wärmeaustauschfläche und damit auch bezüglich seiner Kosten reduziert werden. Bei Fahrzeugen mit Klimaanlage befindet sich vor dem Kühler ein Kondensator mit elektrischen Zusatzgebläse - letzteres kann durch die Anhebung der Lüfterdrehzahl entfallen, da der Lüfter hinter dem Kühler durch eine angepaßte Übersetzung ins Schnelle auch den Kühlluftbedarf für den Kondensator, d.h. die Klimaanlage, decken kann.

Gemäß Anspruch 1 besteht das Planetengetriebe aus drei Gliedern, also der einfachsten Form eines Planetengetriebes, wobei der Antrieb über das Gehäuse bzw. die Außensonne und der Abtrieb über die Innensonne erfolgt; das dritte Glied dieses Planetengetriebes ist der Steg bzw. Planetenträger, der umläuft oder abgebremst werden kann. In letzterem Falle stellt sich etwa das für ein entsprechendes Planetengetriebe bekannte Übersetzungsverhältnis zwischen Antrieb und Abtrieb ein. Läuft dagegen der Planetenträger, der getriebekinematisch als Steg ausgebildet ist, mit um, so wird sich zwischen Abtrieb und Antrieb ein Drehzahlverhältnis einstellen, das < 1 ist.

Gemäß Anspruch 1 ist das Kupplungsgehäuse - in an sich bekannter Weise - in eine Vorrats- und eine Arbeitskammer durch eine Trennwand unterteilt, wobei der Zufluß von Scherflüssigkeit in die Arbeitskammer über ein Ventil gesteuert wird; die miteinander im Eingriff befindlichen Getriebeglieder sind in der Arbeitskammer angeordnet. Je nach Füllungsgrad der Arbeitskammer bestimmen sich die zwischen den Getriebegliedern übertragenen Umfangskräfte und damit die Abtriebsdrehzahl: befindet sich beispielsweise infolge geschlossenem Ventil keine Scherflüssigkeit in der Arbeitskammer, so können auch keine Umfangskräfte zwischen den Getriebegliedern übertragen werden, so daß die Abtriebsdrehzahl gleich null bzw. einer niedrigen Leerlaufdrehzahl ist. Bei sich öffnendem Ventil strömt Scherflüssigkeit in die Arbeitskammer, die Spalte zwischen den Getriebegliedern werden gefüllt, und die Kupplung läuft bezüglich ihrer Abtriebsdrehzahl hoch. Das Prinzip der Proportionalregelung für die Abtriebsdrehzahl bleibt somit erhalten.

Gemäß Anspruch 1 sind die Spalte als Axialspalte ausgebildet, wobei eine beliebige Anzahl von Axialspalten mög lich ist. Durch diese Vervielfachung der Axialspalte zwischen den in Eingriff befindlichen Getriebegliedern können die übertragbaren Umfangskräfte proportional vervielfacht werden.

Weitere vorteilhafte Ausgestaltungen der Erfindung gehen aus den Unteransprüchen hervor:

Gemäß Anspruch 2 ergibt sich eine einfache konstruktive Ausbildung des dreigliedrigen Planetengetriebes, nach der die Planetenräder als Doppelscheiben mit einem Axialspalt ausgebildet sind, in den von innen die Abtriebsscheibe (Innensonne) und von außen das Kupplungsgehäuse (Außensonne) eingreifen. Zwischen den Planetenrädern der Innensonne und der Außensonne ist also eine Schlupfverbindung nach dem Prinzip der Flüssigkeitsreibungskupplung hergestellt, die gewährleistet, daß Umfangskräfte in ähnlicher Weise wie bei einem Planetengetriebe herkömmlicher Art zwischen den Getriebegliedern übertragen werden. Die sich einstellenden Übersetzungsverhältnisse entsprechen denen der herkömmlichen Umlaufgetriebe.

Gemäß Anspruch 3 erfolgt die Steuerung zwischen tertiärseitiger Arbeits- und Vorratskammer temperaturabhängig, d.h. in Abhängigkeit von der Kühlluft-oder Kühlmitteltemperatur. Dadurch wird die Abtriebsdrehzahl bzw. die Lüfterdrehzahl etwa proportional zur Temperatur gesteuert.

Gemäß Anspruch 4 erfolgt diese Steuerung über ein Bimetall, d.h. in Abhängigkeit von der Temperatur der Kühlluft, die auf die Kupplungsfrontseite trifft.

Gemäß Anspruch 5 ist der Abtrieb der Kupplung als Welle aus dem Kupplungsgehäuse geführt und trägt den Lüfter, der die Kühlluft durch den Kühler fördert und somit die Kühltemperatur bestimmt. Durch diese konstruktive Ausführung ist es möglich, eine derartige Flüssigkeitsreibungskupplung mit eingebauter Übersetzung ins Schnelle in bisher bekannter Weise an den Motor von Kraftfahrzeugen anzubauen, ohne daß es motor-oder fahrzeugseitig konstrukiver Änderungen bedürfte.

Ein 1. Ausführungsbeispiel der Erfindung wurde in der Stammanmeldung dargestellt und beschrieben worauf hier verwiesen wird. Ein 2. Ausführungsbeispiel ist Gegenstand dieser Teilanmeldung.

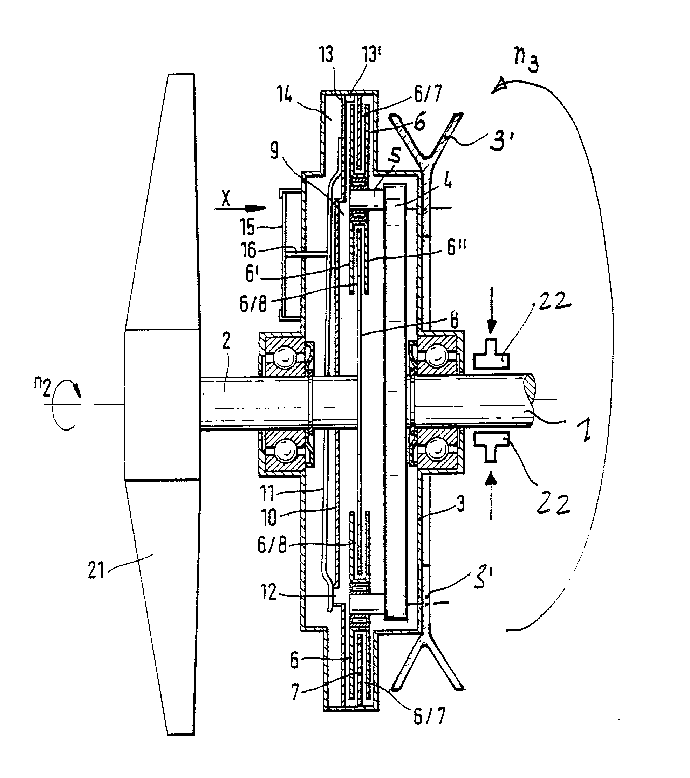

So ist es beispielsweise auch möglich, den Steg festzuhalten bzw. abzubremsen, über das Kupplungsgehäuse, d.h. die Außensonne anzutreiben und über die Innensonne abzutreiben. In diesem Falle ergäbe sich ebenfalls eine Übersetzung ins Schnelle; das von der Antriebsdrehzahl abhängige Fliehkraftventil müßte dann an der antreibenden Außensonne angebracht sein. Eine solche Lösung kann bezüglich des Einbaues in Kraftfahrzeuge besondere Vorteile haben - sie ist in der Zeichnung dargestellt und wird im folgenden näher beschrieben:

Die einzige Figur der Zeichnung zeigt die erfindungsgemäße Flüssigkeitsreibungskupplung mit einer Planetenübersetzung, wobei bei diesem Ausführungsbeispiel der Antrieb nicht über die Stegwelle 1, sondern über das Kupplungsgehäuse 3 erfolgt, welches über eine Keilriemenscheibe 3' angetrieben wird. Der Abtrieb erfolgt über die Abtriebswelle 2, auf der sich der Lüfter 21 befindet. Die Stegwelle 1 kann mittels der Bremse 22 festgehalten oder gelöst werden. Ist die Bremse 22 gelöst, so läuft die Stegwelle 1 mit dem Steg 4 bei angetriebenem Gehäuse 3 mit um, und es liegt Kupplungsbetrieb vor, d.h. die Abtriebsdrehzahl $n_2$ ist kleiner als die Antriebsdrehzahl $n_3$ für das Kupplungsgehäuse 3. Soll eine Übersetzung ins Schnelle für die Lüfterdrehzahl erreicht werden, so wird die Stegwelle 1 über die Bremse 22 festgesetzt, so daß das Planetengetriebe wie ein Standgetriebe, d.h. mit einer Standübersetzung ins Schnelle arbeitet: Diese Standübersetzung $n_2/n_3$ größer 1 entspricht etwa dem Verhältnis der Radien $Ra/Ri$ von Ringscheibe 7 (Außensonne) und Abtriebsscheibe 8 (Innensonne).

Diese Ausführungsvariante mit angetriebenem Gehäuse hat gegenüber der Variante mit angetriebenem Steg insbesondere den Vorteil, daß das Silikonöl im Kupplungsgehäuse durch dessen Rotation ständig nach außen gedrückt wird, so daß sich eindeutige Benetzungs- und damit Übetragungsverhältnisse bei der Flüssigkeitsreibung im Inneren des Kupplungsgehäuses ergeben.

## Ansprüche

1. Flüssigkeitsreibungskupplung mit Primärteil und Sekundärteil, wobei die Leistung zwischen Antrieb und Abtrieb über eine Scherflüssigkeit übertragen wird, die sich in einer durch Spalte gebildeten Arbeitskammer befindet, **dadurch gekennzeichnet,** daß Primär- und Sekundärteil (1, 2) Glieder eines dreigliedrigen Planetengetriebes sind, wobei die miteinander in Eingriff befindlichen Glieder (6, 7, 8) Axialspalte zur Aufnahme der Scherflüssigkeit zwischen sich bilden, wobei der Primärteil (1) den Planetenräder (6) tragenden Steg (4, 5), der Sekundärteil (2) das eine Abtriebsscheibe (8) tragende innere Sonnenrad und ein gegenüber Primär- und Sekundärteil drehbar gelagertes Tertiärteil (Kupplungsgehäuse 3) das äußere Sonnenrad bildet und wobei die mit dem Steg (4) umlaufenden Planetenräder (6) über die Axialspalte (6/7, 6/8) sowohl mit dem inneren als auch mit dem äußeren Sonnenrad in Eingriff stehen, und daß das Tertiärteil (Kupplungsgehäuse 3) durch eine Trennwand (10) in eine Arbeits- und in eine Vorratskammer (9, 14) unterteilt ist, wobei zwischen Arbeits- und Vorratskammer eine steuerbare Fluidverbindung (11, 12) besteht, daß in der Arbeitskammer (9) die miteinander in Eingriff befindlichen Glieder (6, 7, 8) des Planetengetriebes angeordnet sind, und daß das Primärteil (1) bzw. der Steg (4, 5) abbremsbar ist und der Antrieb über das Tertiärteil bzw. Kupplungsgehäuse (3) erfolgt.

2. Flüssigkeitsreibungskupplung nach Anspruch 1, **dadurch gekennzeichnet,** daß die Planetenräder als Doppelscheiben (6) mit einem Axialspalt, das innere Sonnenrad als einfache Scheibe (8) und das äußere Sonnenrad als einfache Ringscheibe (7) ausgebildet sind, wobei die Scheibe (8) und die Ringscheibe (7) in den Axialspalt der Doppelscheibe (6) eingreifen und zwei Axialspalte (6/7, 6/8) bilden.

3. Flüssigkeitsreibungskupplung nach Anspruch 1 oder 2, **dadurch gekennzeichnet,** daß die Fluidverbindung (11, 12) zwischen Arbeits- und Vorratskammer (9, 14) temperaturabhängig steuerbar ist.

4. Flüssigkeitsreibungskupplung nach Anspruch 1, 2 oder 3, **dadurch gekennzeichnet,** daß die Fluidverbindung (11,12) zwischen Arbeits- und Vorratskammer (9, 14) über ein außen am Kupplungsgehäuse (3) angeordnetes Bimetall (15) steuerbar ist.

5. Flüssigkeitsreibungskupplung nach einem der Ansprüche 2 bis 4, **dadurch gekennzeichnet,** daß der abtreibende Sekundärteil als Welle (2) aus dem Kupplungsgehäuse (3) geführt ist, auf der ein Lüfter (21) befestigt ist.

T-83-B-01E